# EUROPEAN PATENT SPECIFICATION

(11) **EP 2 551 151 B1**
(45) Date of publication and mention of the grant of the patent: **14.12.2016**
(21) Application number: 12005468.9
(22) Date of filing: 26.07.2012
(51) Int. Cl.: B60P 3/10

(54) **Structure applicable for the transportation of boats or roof luggage racks**
Struktur für den Transport von Booten oder einen Dachgepäckträger
STRUCTURE POUR LE TRANSPORT DE BATEAUX OU porte-bagages de toit

(30) Priority: 26.07.2011 IT AN20110104
(43) Date of publication of application: 30.01.2013
(73) Proprietor: Falcinelli, Marcello, 60019 Senigallia (AN) (IT)
(72) Inventor: Falcinelli, Marcello, 60019 Senigallia (AN) (IT)
(74) Representative: Cacciamani, Clizia

(56) References cited:
- DE-U1- 9 217 122
- DE-U1- 29 507 829
- US-A- 2 765 940
- US-A- 3 877 594
- US-A- 5 505 579
- US-A1- 2006 285 954

## Description

The present invention relates to a structure applicable to the roof of motor vehicles for the transportation of boats or roof luggage racks, particularly a structure which assists the user in securing the boat or luggage rack to said structure for the transportation thereof.

Currently, the state of the art provides trailers and/or boat carriers hauled by motor vehicles for the support and transportation of small boats such as dinghies, canoes, rowboats or the like.

While as for the luggage racks, said luggage racks are known to be directly positioned on the roof of the motor vehicle without the provision of means for assisting the user during the loading and unloading steps.

DE 9217122U1 discloses a load carrier for a motor vehicle with a roof having two long rails in a parallel extension; the device is said by the inventor to allow the loading and unloading to be safely done in a quicker time. The load carrier comprises a fixed frame and a frame movable with respect to the fixed frame and loading means arranged between the two frames.

Accordingly, the aim of the present invention is to provide a structure applicable to the roof of motor vehicles for the transportation of boats or roof luggage racks, which assists the user in securing the boat or luggage rack to said structure while facilitating its loading onto and unloading from the roof of the motor vehicle.

Therefore, the object of the present invention is a structure applicable to the roof of motor vehicles for the transportation of boats or roof luggage racks, as defined in claim 1.

In particular, such a structure comprises a fixed frame securely connected to the roof of the motor vehicle, a movable frame, means for guiding the movable frame with respect to the fixed frame, the movable frame being slidably and tiltably coupled with the fixed frame, and there being provided resilient loading means arranged between the fixed frame and the movable frame. Furthermore, said movable frame further comprises at least two rod-shaped members parallel to each other and fixedly joined by at least two bars arranged orthogonally with respect to said rod-shaped members and comprising at least two support means, the fixed frame and the movable frame having positioned therebetween a plate comprising a pin to which a cable is attached and a through-hole through which an intermediate member is passed to contact the rod-shaped member of the movable frame to which it is locked.

These and other features of the invention, and the advantages derived therefrom, will become apparent from the following detailed description of a preferred embodiment thereof given by way of a non-limiting example with reference to the accompanying drawings, in which:
Fig. 1 is a side view of the structure applicable to the roof of motor vehicles for the transportation of boats or luggage racks according to the present invention during the loading step;
Fig. 2 is a side view of the structure depicted in Fig. 1 during the loading step;
Fig. 3 is a side view of the structure depicted in Fig. 1 during the loading step;
Fig. 4 is a side view of the structure depicted in Fig. 1 when the loading step is completed;
Fig. 5 is a top view of the fixed frame;
Fig. 6 is a top view of the movable frame;
Fig. 7 is a sectional view of the structure applicable to the roof of motor vehicles for the transportation of boats or luggage racks according to the present invention;
Fig. 8 is a sectional view of the profile from which the fixed frame and the movable frame are preferably formed according to a variant embodiment;
Fig. 9 is a sectional view of the structure;
Fig. 10 is a sectional view of the end of the rod-shaped member;
Fig. 11 is a sectional view of the end of the rod-shaped member in a different operative position.

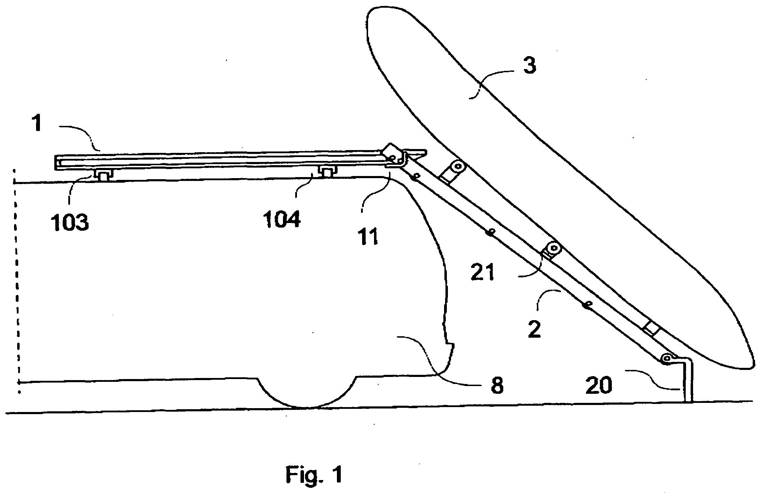

In Fig. 1 there is illustrated a side view of the structure applicable to the roof of motor vehicles for the transportation of boats or luggage racks according to the present invention.

The Figure shows a portion of the motor vehicle 8 whose roof has secured thereto the fixed frame 1.

Said fixed frame 1 is installed on object-support bars 103 and 104 which can be arranged on the roof of the motor vehicles in order to allow objects or roof luggage racks to be secured to the roof of said motor vehicles.

The movable frame 2 is connected to the fixed frame 1 by means of sliding means which ensure that the movable frame 2 can be slidably moved longitudinally with respect to the fixed frame 1.

Moreover, the fixed frame 1 includes a member 11 acting as a travel stop for the sliding movement of the movable frame 2.

Said movable frame has at least one support leg 20 which allows the movable frame 2 to be laid down on the ground during the loading and unloading steps.

Furthermore, at least two support means 21 are provided along the movable frame 2 in order to provide support points for the object 3 during its loading and unloading steps, thereby assisting the user in said operations.

Said object 3 includes boats such as dinghies, canoes, rowboats or the like, as well as roof luggage racks.

If the object 3 comprises a roof luggage rack, the support means 21 can be replaced with suitable support bars not shown in the Figure.

Said object 3 is conveniently secured to the movable frame 2 by means of suitable securing means not shown in the Figure.

During the loading step, the object 3 is loaded onto and secured to the movable frame 2.

Assuming that like members are referred to by like reference numerals, from a comparison of Figs. 1, 2, 3 and 4 it can be inferred how the loading step proceeds.

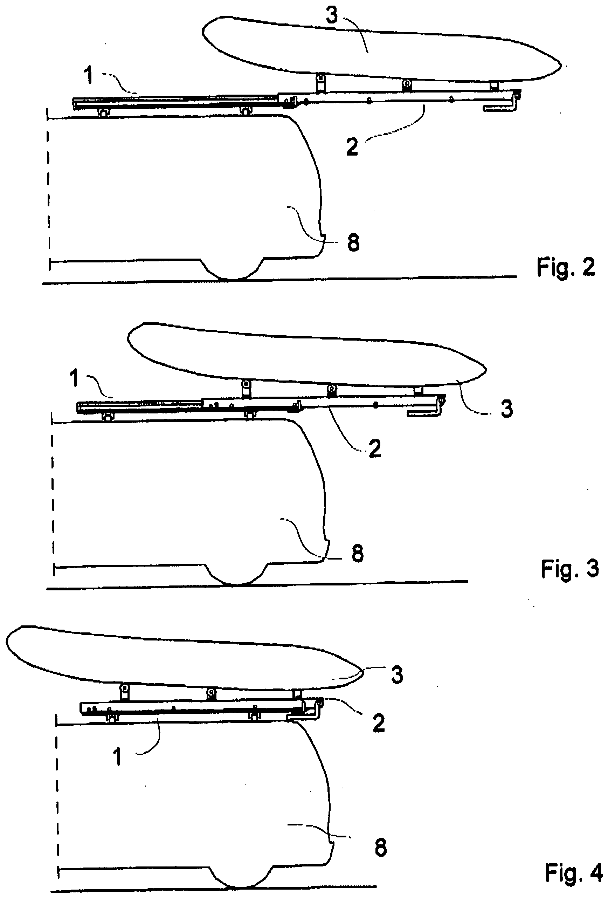

In Fig. 1 there is shown the step of loading the object 3 onto the movable frame 2, while in subsequent Figs. 2, 3 and 4 there is shown the step of closing the structure applicable to the roof of motor vehicles for the transportation of boats or roof luggage racks according to the present invention.

From Fig. 2 it can be noted that, once the object 3 is secured to the movable frame 2, said movable frame 2 is lifted up to a position parallel to the fixed frame 1.

At this point, said movable frame 2 is then slidably moved with respect to said fixed frame 1. in order to close the structure and bring the object 3 towards the roof of the motor vehicle 8.

In Fig. 4 there is shown the structure according to the present invention in the closed position and ready for being transported.

From a comparison of Figs. 1, 2, 3 and 4, one can infer the movements for opening and closing the structure applicable to the roof of motor vehicles for the transportation of boats or roof luggage racks according to the present invention.

In Fig. 1, the object 3 has been loaded on the movable frame 2 and the structure can now be closed for allowing said object 3 to be transported according to the following steps:
a) lifting the movable frame 2;
b) when the frame 2 is in the same lying plane as the fixed frame 1, pushing ahead said movable frame 2;
c) when the movable frame 2 contacts the travel stop 11, locking the fixed frame 1 by means of suitable locking means.

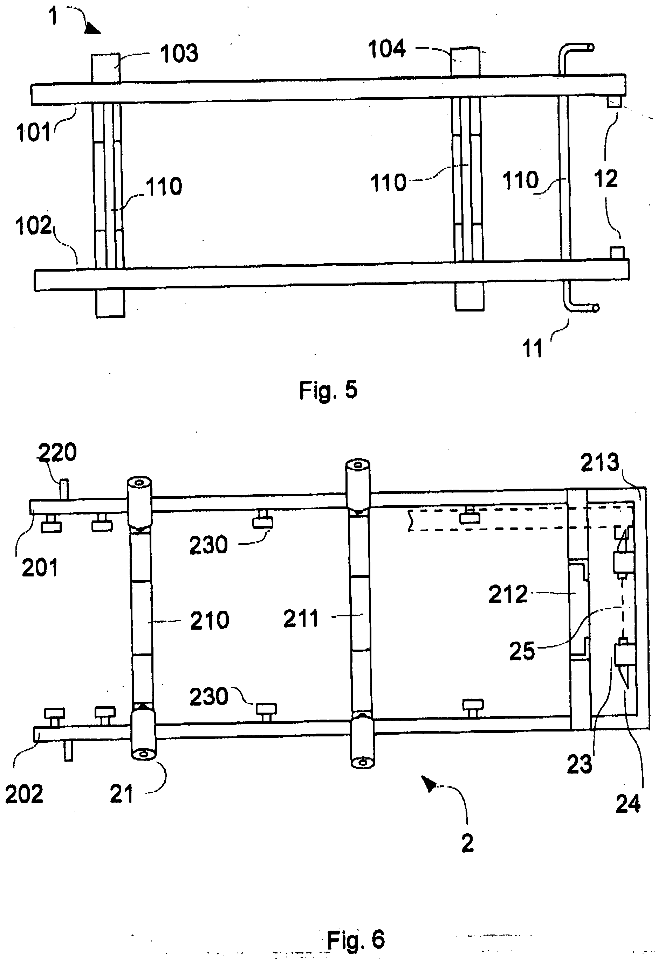

In Fig. 5 there is shown the fixed frame 1 comprising two profiles 101, 102 parallel to each other and fixedly joined by bars 110; said bars 110 being orthogonal to said profiles 101, 102.

The profiles 101, 102 are secured to either the object-support bars 103, 104 of the motor vehicle or the prearrangements provided on the roof of said motor vehicles for securing the object-support bars.

The profiles 101, 102 have members 12 comprising a cavity.

In Fig. 6 there is shown the movable frame 2 comprising rod-shaped members 201, 202 parallel to each other and fixedly joined by bars 210, 211, 212, 213; said bars 210, 211, 212, 213 being orthogonal to said rod-shaped members 201, 202.

Each of the members 210, 211 has positioned thereon at least two support means 21 in order to provide support points during the loading and unloading steps, thereby assisting the user in said operations.

Said movable frame 2 has projecting members 220 intended for cooperating with the member 11 provided on the fixed frame 1 in order to form travel stops when the structure for the transportation of boats or roof luggage racks according to the present invention is opened.

Furthermore, said movable frame 2 has sliding means 230 coupled with the guide means provided on said fixed frame 1, wherein said sliding means 230 comprise freely rotating wheels which are slidably moved into a cavity of said profiles 101, 102 forming the fixed frame 1.

Said sliding means 230 are attached to the movable frame 2 by means of suitable locking means which allow the position of the sliding means 230 along the body of the movable frame 2 to be adjusted.

Furthermore, the bar 213 has arranged thereon at least one member 23 in which a pin 24 is slidably fitted.

Said pin 24 can be slidably moved with respect to said member 23 to cooperate with the member 12 of the fixed frame 1 in order to lock the movable frame 2 to the fixed frame 1 when the structure is closed.

In fact, said pin 24 is urged by a spring which pushes it outwardly; when the structure is being closed, the pin 24 is guided by the member 12 up to the locking position and, when in the closed configuration, said pin 24 is accommodated in and prevented from leaving the hole of the member 12 due to the spring which continually pushes it outwardly, thereby preventing an accidental opening of the structure during its transportation.

When the structure has to be unlocked in order to open it, the pin 24 should be pulled inwardly by suitable control means 25.

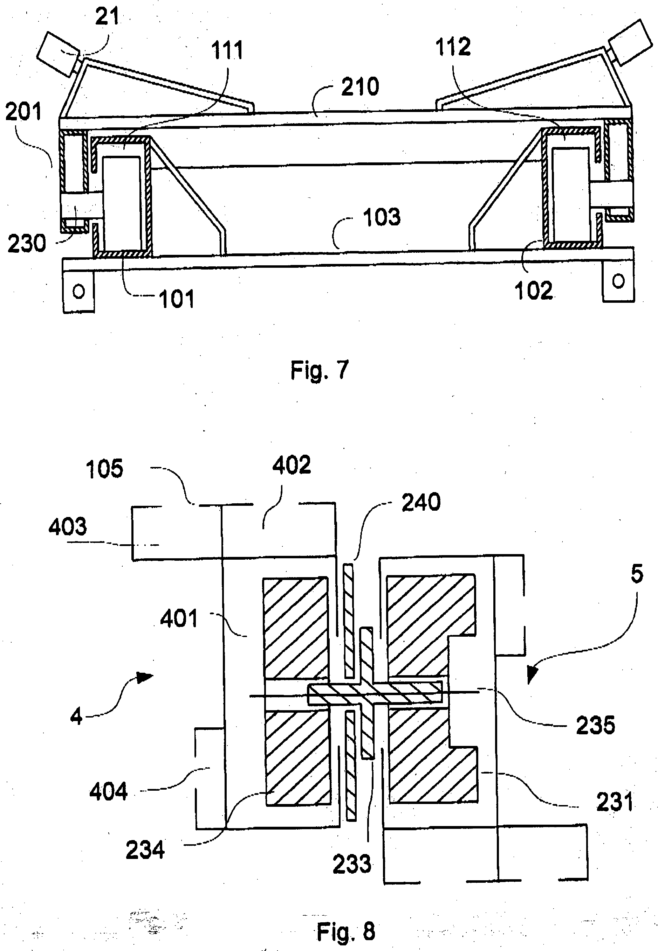

Fig. 7 is a sectional view of the structure applicable to the roof of motor vehicles for the transportation of boats or luggage racks according to the present invention.

The sliding means 230 are slidably moved along cavities 111, 112 of the profiles 101, 102 to allow the movement of the movable frame 2 to be guided during the loading and unloading steps.

Fig. 8 is a view of a variant embodiment wherein both the fixed frame 5 and the movable frame 4 are formed from the profile 105.

The profile 105 is shaped in such a way to include cavities 401, 402, 403, 404.

The cavity 401 is adapted for accommodating the sliding means described in the subsequent Figure, while the cavities 402, 403, 404 allow the object 3 or other devices to be secured to the profile 105.

The Figure shows two profiles 105 suitably arranged to form the fixed frame 5 and the movable frame 4.

Said profiles 105 have arranged therebetween an intermediate member 233 which allows the parts to be locked while acting as a fulcrum for the tilting movement of the movable frame 4 with respect to the fixed frame 5.

The cross-section of the intermediate member 233 is substantially shaped as a cross whose ends have positioned thereon and attached thereto the sliding means 231 and the clamping means 234, the sliding means 231 being accommodated in the fixed frame 5 and the clamping means being accommodated in the movable frame 4.

A plate 240 is positioned between the arms of the cross forming the intermediate member 233 and the movable frame 4.

When the fixing means 235 are tightened, the clamping means 234 and the sliding means 231 are locked to the intermediate member 233, wherein said intermediate member 233 pivotally connects the movable frame 4 to the fixed frame 5 in order to enable a tilting movement of said movable frame 4 with respect to said fixed frame 5.

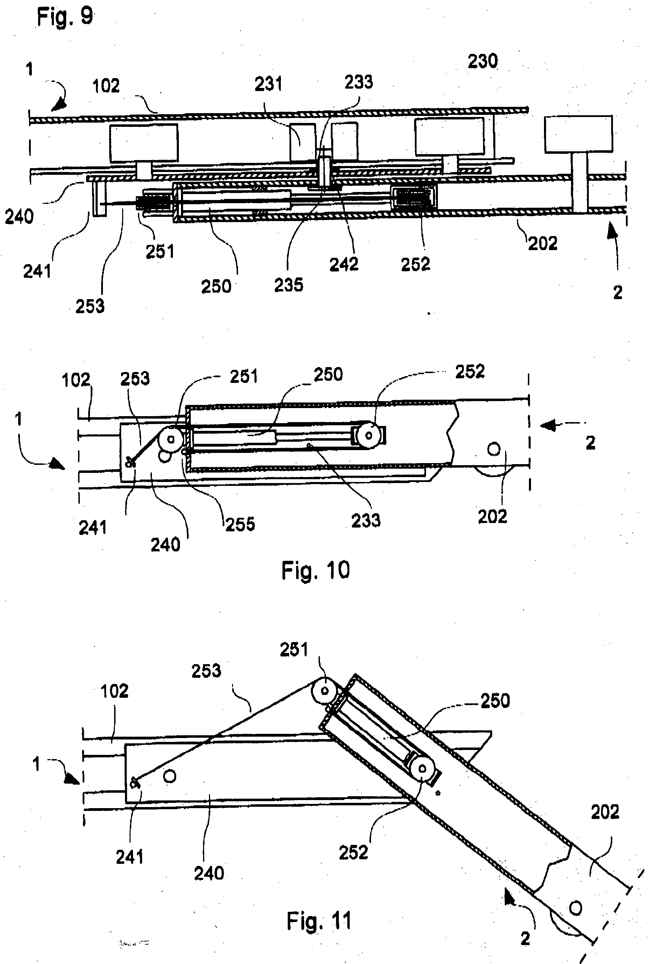

Fig. 9 shows a cross-section of the structure.

The Figure shows a resilient loading means 250 which is positioned at one end of the rod-shaped member 202 of the movable frame 2.

Said resilient loading means 250 comprises a hydraulic jack, more particularly a locking gas piston attached to the end of the rod-shaped member 202, and the end of the piston has attached thereto a pulley 252.

A pulley 251 is attached to the base of the rod-shaped member 202.

A plate 240 comprising a pin 241 having attached thereto a cable 253 and a through-hole 242 is positioned between the profile 102 and the rod-shaped member 202.

The intermediate member 233 is passed through the through-hole 242 of the plate 240 and the rod-shaped member 202.

The end of said intermediate member 233 is locked to the rod-shaped member 202; this allows the intermediate member 233 to act as a fulcrum for the tilting movement of the movable frame 2 with respect to the fixed frame 1.

This will be better understood from the description of the subsequent drawings.

Fig. 10 shows a cross-section of the end of the rod-shaped member 202 in which the resilient loading means 250 is positioned.

From the Figure it can be inferred how the cable 253 is locked to the pin 241 and redirected by the pulleys 251, 252 up to the hole 255 (not shown in the Figure) of the base of the rod-shaped member 202 to which it is secured.

Fig. 11 shows a cross-section of the end of the rod-shaped member 202 in which the resilient loading means 250 is positioned.

From a comparison of Fig. 10 and Fig. 11 it can be inferred how the resilient loading means 250 assists the user during the opening and closing of the structure for the transportation of boats or roof luggage racks according to the present invention.

By gripping and downwardly pushing the member 213 of the movable frame 2, the end shown in Fig. 10 is moved upwards due to the intermediate member 233 acting as a fulcrum.

During this movement, the cable 253 is driven over the pulleys 251, 252 to push the piston whose end has attached thereto the pulley 252 within the hydraulic jack 250; this assists the user in the downward movement of the movable frame 2, particularly when said movable frame 2 is loaded. In fact, when the piston is retracted into the hydraulic jack 250, it acts as a brake against the downward movement of the movable frame 2 thereby making said downward movement smoother, *i.e.* facilitating the task of the user by reducing the physical effort required for supporting and accompanying the movable frame 2 during said downward movement.

Once the structure is opened and the object 3 is loaded on the movable frame 2, the user is further facilitated in the closing step by said hydraulic jacks 250.

In fact, during the closing step, the movable frame 2 is lifted and the end of said movable frame 2 as shown in Fig. 10 is correspondingly moved downwards; during this movement, the cable 253 is moved over the pulleys 251, 252 to reduce the thrust applied to the piston whose end has attached thereto the pulley 252, and then, when the piston is forced away from the hydraulic jack 250, it urges against the cable 253 to bring the end of the movable frame 2 as shown in Fig. 11 and the profile 102 close to each other in order to assist the user in the closing movement of the structure.

This assists the user in the upward movement of the movable frame 2, particularly when said movable frame 2 is loaded, thereby reducing the physical effort required for supporting and accompanying the movable frame 2 during said upward movement.

## Claims

1. Structure applicable to the roof of motor vehicles, for example for the transportation of boats or roof luggage racks, comprising a fixed frame (1) securely connectable to said roof, a movable frame (2), means for guiding said movable frame (2) with respect to said fixed frame (1), said movable frame (2) being slidably and tiltably coupled with said fixed frame (1), and there being provided resilient loading means (250) arranged between said fixed frame (1) and said movable frame (2), wherein said movable frame (2) further comprises at least two rod-shaped members (201, 202) parallel to each other and fixedly joined by at least two bars (210, 211, 212, 213) arranged orthogonally with respect to said rod-shaped members and comprising at least two support means (21),
**characterized in that** the fixed frame (1) and the movable frame (2) have positioned therebetween a plate (240) comprising a pin (241) to which a cable (253) is attached and a through-hole (242) through which an intermediate member (233) is passed to contact the rod-shaped member (201, 202) of the movable frame (2) to which it is locked.

2. Structure according to claim 1, wherein said fixed frame (1) comprises at least two profiles (101, 102) parallel to each other and fixedly joined by at least two bars (110) arranged orthogonally with respect to said profiles (101, 102).

3. Structure according to any one of claims 1 to 2, wherein said movable frame (2) has projecting members (220) intended for cooperating with suitable means (11) provided on the fixed frame to form a travel stop.

4. Structure according to any one of the preceding claims 1 to 3, wherein said movable frame (2) has sliding means (230) coupled with the guide means provided on said fixed frame (1).

5. Structure according to claim 4, wherein said sliding means (230) comprise freely rotating wheels.

6. Structure according to claim 4 or 5, wherein the sliding means (230) are slidably moved into a cavity (111, 112; 401) of said profiles (101 , 102) forming the fixed frame (1).

7. Structure according to any one of claims 1 to 6, wherein said cable (253) attached to said pin (241) is suitably redirected by guide means (251, 252) comprising pulleys.

8. Structure according to any one of the preceding claims 1 to 7, wherein at least one bar (210, 211, 212, 213) of said movable frame (2) has positioned thereon at least one pin (24) slidably movable along said bar (210, 211, 212, 213) and cooperating with suitable coupling means (12) arranged on the fixed frame (1) in order to lock said movable frame (2) to said fixed frame (1).

9. Structure according to claim 8, wherein said movable frame (2) can be unlocked/locked with respect to said fixed frame (1) by suitable control means (25).

## Patentansprüche

1. Struktur, anwendbar auf dem Dach von Kraftfahrzeugen, zum Beispiel für den Transport von Booten oder Dachgepäckträgern, die einen festen Rahmen (1), der sicher an besagtes Dach angebracht werden kann, einen beweglichen Rahmen (2), Mittel, um besagten beweglichen Rahmen (2) in Bezug auf besagten festen Rahmen (1) zu führen, besagter beweglicher Rahmen (2) ist gleitbar und kippbar an besagten festen Rahmen (1) angebracht und sie sind mit federnden Lademitteln (250) ausgestattet, die zwischen besagtem festen Rahmen (1) und besagtem beweglichen Rahmen (2) angeordnet sind, wobei besagter beweglicher Rahmen (2) weiter zwei stabförmige Teile (201, 202) umfasst, die parallel zu einander liegen und fest durch mindestens zwei Stangen (210, 211, 212, 213) verbunden sind, die orthogonal in Bezug auf besagte stabförmige Teile angeordnet sind und mindestens zwei Stützmittel (21) umfassen,
dadurch charakterisiert, dass der feste Rahmen (1) und der bewegliche Rahmen (2) dazwischen eine Platte (240) positioniert haben, die einen Stift (241) umfasst, an den das Kabel (253) angebracht ist und ein Durchgangsloch (242), durch welches eine Zwischenteil durchgeführt wird, um das stabförmige Teil (201, 202) des beweglichen Rahmens (2), an welchen es gesichert ist, zu verbinden.

2. Struktur gemäß Anspruch 1, wobei besagter fester Rahmen (1) mindestens zwei Profile (101, 102) umfasst, die parallel zueinander liegen und fest durch mindestens zwei Stagen (110) verbunden sind, die orthogonal in Bezug zu besagten Profilen (101, 102) angeordnet sind.

3. Struktur gemäß einem der Ansprüche 1 bis 2, wobei besagter beweglicher Rahmen (2) herausragende Teile (220) hat, die mit geeigneten Mitteln (11) zusammenzuwirken sollen, die auf dem festen Rahmen befestigt sind, um einen Anschlag zu formen.

4. Struktur gemäß einem der Ansprüche 1 bis 3, wobei besagter beweglicher Rahmen (2) ein gleitendes Teil (230) hat, das mit dem Führungsteil gekoppelt ist, das auf dem festen Rahmen (1) vorgesehen ist.

5. Struktur gemäß Anspruch 4, wobei besagtes gleitendes Teil (230) frei drehende Räder umfasst.

6. Struktur gemäß Anspruch 4 oder 5, wobei besagtes gleitendes Teil (230) gleitend in einen Hohlraum (111, 112; 401) besagter Profile (101, 102), die den festen Rahmen (1) bilden, bewegt wird.

7. Struktur gemäß einem der Ansprüche 1 bis 6, wobei besagtes Kabel (253), das an besagten Stift (241) befestigt ist, auf geeignete Weise durch Führungsmittel (251, 252), die Umlenkrollen umfassen, umgeleitet wird.

8. Struktur gemäß einem der Ansprüche 1 bis 7, wobei mindestens eine Stange (210, 211, 212, 213) des besagten beweglichen Rahmens (2) darauf mindestens einen Stift (24), der entlang besagter Stange (210, 211, 212, 213) gleitbar ist, positioniert hat und der mit geeignetem Kupplungsmittel (12), das auf dem festen Rahmen (1) angeordnet ist, um besagten beweglichen Rahmen (2) an besagten festen Rahmen (1) zu sichern, zusammenwirkt.

9. Struktur gemäß Anspruch 8, wobei besagter beweglicher Rahmen (2) in Bezug auf besagten festen Rahmen (1) durch geeignete Steuermittel entsichert/gesichert werden kann.

## Revendications

1. Structure applicable sur le toit de véhicules à moteur, par exemple pour le transport de bateaux ou de porte-bagages de toit, comprenant un châssis fixe (1) pouvant être attaché en toute sécurité audit toit, un châssis mobile (2), des systèmes pour guider ledit châssis mobile (2) par rapport audit châssis fixe (1), ledit châssis mobile (2) étant couplé de manière coulissante et pivotante audit châssis fixe (1), étant fournis de systèmes de chargement élastiques (250) disposés entre ledit châssis fixe (1) et ledit châssis mobile (2), dans laquelle ledit châssis mobile (2) comprend en outre au moins deux éléments en forme de barre (201, 202) parallèles les uns aux autres et fusionnés de façon fixe au moyen d'au moins deux barres (210, 211, 212, 213) disposées orthogonalement par rapport auxdits éléments en forme de barre et comprenant au moins deux systèmes de support (21),
**caractérisée en ce que** le châssis fixe (1) et le châssis mobile (2) ont une plaque (240) interposée entre eux comprenant une vis (241) auquel un câble (253) est fixé, et un trou traversant (242) à travers lequel un élément intermédiaire (233) est passé pour entrer en contact avec l'élément en forme de barre (201, 202) du châssis mobile (2) auquel il est bloqué.

2. Structure selon la revendication 1, dans laquelle ledit châssis fixe (1) comprend au moins deux profilés (101, 102) parallèles les uns aux autres et fusionnés au moyen d'au moins deux barres (110) disposées orthogonalement par rapport auxdits profilés (101, 102).

3. Structure selon l'une quelconque des revendications 1 ou 2, dans laquelle ledit châssis mobile (2) a des éléments en saillie (220) destinés à coopérer avec des systèmes appropriés (11) prévus sur le châssis fixe pour former un arrêtoir.

4. Structure selon l'une quelconque des revendications précédentes de 1 à 3, dans laquelle ledit châssis mobile (2) a des systèmes de coulissement (230) couplés avec les systèmes de guidage prévus sur ledit châssis fixe (1).

5. Structure selon la revendication 4, dans laquelle lesdits systèmes de coulissement (230) comprennent des roues à rotation libre.

6. Structure selon la revendication 4 ou 5, dans laquelle les moyens de coulissement (230) sont déplacés de manière coulissante dans une cavité (111, 112 ; 401) desdits profilés (101, 102) formant le châssis fixe (1).

7. Structure selon l'une quelconque des revendications de 1 à 6, dans laquelle ledit câble (253) fixé à ladite vis (241) est convenablement redirigé par des systèmes de guidage (251, 252) comprenant des poulies.

8. Structure selon l'une quelconque des revendications précédentes de 1 à 7, dans laquelle au moins une barre (210, 211, 212, 213) dudit châssis mobile (2) a au moins une vis (24) positionnée sur celui-ci déplaçable de manière coulissante le long de ladite barre (210, 211, 212, 213) et coopérant avec des systèmes d'accouplement appropriés (12) disposés sur le châssis fixe (1) de façon à bloquer ledit châssis mobile (2) audit châssis fixe (1).

9. Structure selon la revendication 8, dans laquelle ledit châssis mobile (2) peut être débloqué/bloqué par rapport audit châssis fixe (1) par des systèmes de commande appropriés (25).
